# EUROPEAN PATENT SPECIFICATION

(11) **EP 2 128 112 B1**
(45) Date of publication and mention of the grant of the patent: **11.05.2016**
(21) Application number: 09004985.9
(22) Date of filing: 03.04.2009
(51) Int. Cl.: C04B 40/00

(54) **Molecular de-airentrainer compositions and methods of use of same**
Molekulare luftporenabbauende Zusammensetzungen und Verfahren zu ihrer Verwendung
Compositions moléculaires d'entraîneur de désaréage et procédés d'utilisation associés

(30) Priority: 08.04.2008 US 99520
(43) Date of publication of application: 02.12.2009
(73) Proprietor: Air Products and Chemicals, Inc., Allentown, PA 18195-1501 (US)
(72) Inventor: Herschke, Laurent Jacques Robert, 65795 Hattersheim (DE)
(74) Representative: Kador & Partner

(56) References cited:
- WO-A-00/42140
- WO-A-97/39093
- WO-A-2004/056445
- WO-A-2006/034459
- US-A- 5 616 811

## Description

### BACKGROUND OF THE INVENTION

The invention relates to de-airentrainer compositions comprising at least one ethoxylated ether amine and at least one acetylenic alkoxylate. The invention is particularly suitable for use in a superplasticizing admixture. The invention can be used for degassing mixtures, and in particular, mixtures which contain amphiphilic molecules. The compositions of the invention are particularly useful in the preparation of cementitious mixtures, coatings and pressure sensitive adhesives.

In the preparation of the aqueous mixtures, including but not limited to superplasticizing admixtures, cementious compositions, gypsum based compositions, mortars and mortar tiles, grouts, screeds, pigment slurries, plasters, overprint varnishes, coatings and adhesives, the air content of the final mixture can be an important factor in the performance characteristics and function of the mixture. This is particularly so in the case of curable mixtures, in which the air content of the mixture influences many performance characteristics of the material during and after curing, including long-term storage life, curing characteristics, compression strength, waterproofness, and frost resistance. Accordingly, it is desirable to control the air content of such mixtures during their preparation and storage.

The aqueous mixtures described above commonly contain amphiphilic molecules which may add to the existing problem of controlling air content in aqueous mixtures.

The problem of airentrainment by cementious superplasticizing admixtures is further compounded by inherent environmental conditions such as temperature, humidity, and the fact that the admixtures must be able to function over a broad range of these environmental conditions. The effects of varying environmental conditions and the use of superplasticizers must be balanced against the ability of conventional de-airentrainers to provide proper air content.

Improper air content in cementitious compositions may lead to negative performance characteristics such as inferior structural integrity, reduced compressive strength, retarded freeze/thaw resistance and slowed strength development. In order to produce high quality construction materials, it is therefore necessary to effectively control the air content of these materials. Accordingly, there exists a need to provide more effective de-airentrainment of aqueous materials, such as superplasticizing high performance cementitious compositions that is not currently provided by conventional de-airentrainers.

In addition to the inability of conventional de-airentrainers to control air content in high performance cementitous compositions, conventional de-airentrainers are also associated with negative effects such as diminished stability upon storage, particularly upon storage with a superplasticizer, such as in an admixture, and upon storage for extended periods, such as for periods greater than a week. Further, at elevated temperatures, the stability of conventional de-airentrainers is reduced. Thus, there exists a need for de-airentrainer materials that can be stably stored in a superplasticizing admixture for extended periods of time and at elevated temperatures.

The problem of degassing mixtures is not limited to the construction and cement industries. Many of the same problems regarding the control of the gas content of mixtures containing amphiphilic molecules occur in applications such as coating engineering, ink formulation, and adhesives. The conventional de-airentrainers currently used to solve these problems are capable of use at a relatively low concentration in superplasticizing mixtures. If used at a higher concentration, the desirable degassing benefit of the de-entrainer may be greatly diminished or lost entirely. Additionally, these de-airentrainers typically become unstable in admixtures over a short period of time. In addition, if exposed to elevated temperatures, the destabilization of such admixtures typically accelerates.

Therefore, there exists a need for de-airentrainer compositions that can be used in a wide-range of climates and for an extended period of time and that can provide a desired air content in the airentraining superplasticizing admixtures.

WO 2004/056445A discloses a cementitious composition that includes cementitious material, water, a water insoluble defoamer, optionally a dispersant for cementitious compositions, and an amine solubilizing agent that solubilizes the water insoluble defoamer. A method is provided for making a cementitious composition that includes mixing cementitious material, water, a water insoluble defoamer, an amine solubilizing agent that solubilizes the water insoluble defoamer, and optionally a dispersant for cementitious compositions.

### BRIEF SUMMARY OF THE INVENTION

In one embodiment, the present invention provides a de-airentrainer composition according to claim 1. In another embodiment the de-airentrainer composition is according to claim 2.

In one embodiment of the invention the de-airentrainer composition comprises a ratio by weight of Structure BC surfactant to Structure BD Surfactant of less than or equal to 0.1. In another embodiment, the de-airentrainer composition comprises less than or equal to 50% by weight of Structure BC surfactant and is absent of Structure BD surfactant.

In another embodiment, the de-airentrainer composition is admixed with a superplasticizer admixture. The resulting composition demonstrates improved stability and de-aeration control in superplasticizer admixtures commonly used in applications including, but not limited to cement and mortar production, overlays, coatings, inks and varnishes. Typically, from 0.1% to 5.0% by weight of the de-airentrainer composition may be admixed with the superplasticizer admixture. More preferably, from 0.5% to 3.0% by weight of the de-airentrainer composition may be admixed with the superplasticizer admixture.

In another embodiment not according to the invention, a method of making a cement mixture is provided, the method comprising admixing:
(a) water;
(b) a particulate cementitious component;
(c) a superplasticizer; and
(d) the de-airentrainer composition defined above.

In another embodiment, not according to the invention, a method of preparing a coating is provided, the method comprising admixing:
(a) a varnish;
(b) a superplasticizer; and
(c) the de-airentrainer composition defined above.

In another embodiment not according to the invention, the method of preparing a coating may further comprise an ink.

In another embodiment not according to the invention a method of preparing a pressure sensitive adhesive is provided, the method comprising admixing:
(a) adhesive;
(b) superplasticizer; and
(c) the de-airentrainer composition defined above.

### BRIEF DESCRIPTION OF SEVERAL VIEWS OF THE DRAWINGS

Figure 1 shows the tabulated results of Example 9.
Figure 2 shows a graph of the results of Example 10.
Figure 3 shows the tabulated results of Example 11.
Figures 4A and B show graphs of the results of Example 12
Figure 5 shows the tabulated results of Example 13.

### DETAILED DESCRIPTION OF THE INVENTION

### Abbreviations and Definitions

The term "superplasticizer" as used herein refers to one or more materials that can provide improved flow characteristics and performance efficiency to mixtures, such as curable compounds, including cementious compositions, mortars and mortar tiles, grouts, screeds, pigment slurries, plasters, overprint varnishes, coatings and adhesives. As used herein, the term "superplasticizer" refers to both plasticizer and superplasticizer chemicals. Non-limiting examples of such superplasticizers include, but are not limited to, sulfo-modified melamine-formaldehyde condensates, including melamine formaldehyde sulfonates (MFS's) and sulfonated melamine-formaldehyde condensates (SMF's), polycarboxylate ethers, lignin salts, naphthalene sulfonates, polycarboxylated acrylics, salts of carboxylic acids, casein, cocomide derivatives and combinations of one or more thereof.

The terms "cement compositions and "cementitious composition," as used herein, refer to compositions that contain a cement binder, water and, optionally, other ingredients. Such compositions may be cured or curable compositions. Suitable binders include but are not limited to, portland cement, masonry cement, mortar cement, limestone, hydrated lime, fly ash, blast furnace slag, silica fume, metakaolin, and pozzolans. Such compositions cure when the binder of the composition is mixed with water and allowed to hydrate. The terms "paste" and "mortar" refer to classes of cement compositions which include one or more fine aggregates such as sand or other fine particulate materials. The term "concrete" refers to a class of cement compositions which includes one or more coarse aggregates such as stone or other coarse substances. The term "cementitious," as used herein, refers to materials that relate to cement.

The term "de-airentrainer" as used herein refers to a compound or combination of compounds that, when added to a mixture, facilitates the release of air from the mixture. The term "airentrained," as used herein, refers to a mixture that has air incorporated within the mixture. The term "air", as used herein, refers to any gas or any collection of gases.

### Ethoxylated Ether Amines

Ethoxylated ether amines are used with acetylenic alkoxylates and, optionally, other substances to produce the molecular de-airentrainers of the invention. As such, the invention is useful for controlling the gas content of aqueous mixtures. The invention is especially useful in controlling the gas content of airentrained mixtures that contain superplasticizers.

The ethoxylated ether amines used in the invention are compounds according to the following structure (A): 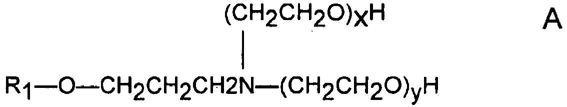 wherein R1 is a branched or unbranched hydrocarbon chain from 5 to 20 carbons in length, preferably from between 7 to 18 carbons in length, most preferably from between 10 to 13 carbons in length; one carbon in the R1 chain can be substituted with an oxygen or nitrogen atom; x is an integer from 0 to 10, preferably from between 2 to 5; y is an integer from 0 to 10, preferably from between 2 to 5; and the sum of x + y is an integer equal to from 1 to 20, and preferably the sum of x + y is an integer equal to from 4 to 10.

Suitable ethoxylated ether amines that can be used in the invention include, but are not limited to, bis (2-hydroxyethyl) isodecyloxypropylamine available commercially from APCl under the trade name E-14-2, poly (5) oxyethylene isodecyloxypropylamine available commercially from APCl under the trade name E-14-5; bis (2-hydroxyethyl) isotridecyloxypropylamine available commercially from APCl under the trade name E-17-2; and poly (5) oxyethylene isotridecyloxypropylamine available commercially from APCl under the trade name E-17-5.

The invention can be practiced with a single ethoxylated ether amine or with multiple ethoxylated ether amines.

### Acetylenic Alkoxylates

Acetylenic alkoxylates are used with ethoxylated ether amines and, optionally, other substances to produce the molecular de-airentrainers of the invention.

Acetylenic alkoxylates used in the invention are compounds according to the following structure (B): 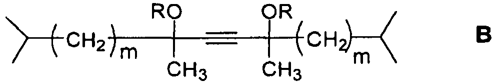 wherein either m is 1 and R is according to structure (C): 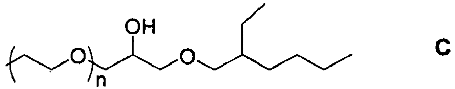 in which n is an integer from 3 to 7 (typically, n will be from 4 to 6), or m is 2 and R is according to structure (D) 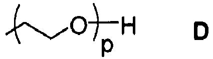 in which p is an integer from 1 to 10, typically from 4 to 10.

A representative compound according to an embodiment of Structure B in which m is 2 and R is according to structure (D) is available commercially from APCI under the trade name DYNOL™ 604 surfactant, shown below.

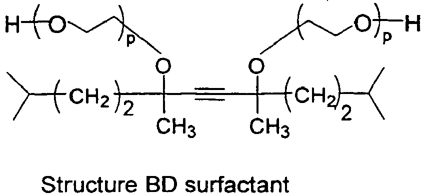

A representative compound according to an embodiment Structure B where m is 1 and R is according to structure (C) is available from Air Products under the trade name SURFYNOL® MD-20 molecular defoamer, shown below.

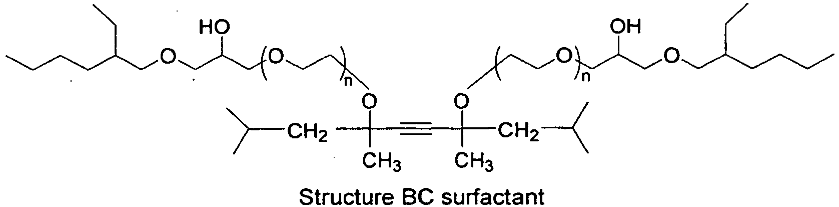

### Superplasticizers

The molecular de-airentrainers of the invention are particularly effective in controlling the air content of superplasticizer admixtures. While the combination of molecular de-airentrainers of the invention with a superplasticizer admixture is not required to practice the invention, one skilled in the art can easily recognize the value of combining the invention with a superplasticizer admixture. Superplasticizers admixtures are generally added to mixtures to provide improved performance characteristics, such as the rheology of the mixture. One negative side effect of the resulting change in rheology of the mixture can be entrainment of air in the mixture during mixing. Thus, for many superplasticizer-containing mixtures, the mixing process may produce undesirable levels of entrained air in the mixture, which may have a negative impact on the performance of the mixture in its intended application. The use of the molecular de-airentrainers of the invention with superplasticizing admixtures can provide improved air content control and may help to overcome the negative side effects associated with the use of known superplasticizing admixtures.

The superplasticizer admixture may be selected from any suitable material or materials as would be recognized by one of ordinary skill in the art. Suitable superplasticizer admixtures include, but are not limited to a sulfo-modified melamine-formaldehyde condensate, a melamine formaldehyde condensate, a sulfonated melamine-formaldehyde condensate, a polycarboxylate ethers, a lignin salt, a naphthalene sulfonate, a polycarboxylated acrylic, a carboxylic acid salt, casein, a cocomide derivative and mixtures of two or more of the foregoing materials.

One preferred class of superplasticizers that can be used with the molecular de-airentrainers of the invention is polycarboxylate ethers (PCE), which are often referred to as PC's or comb polymers. The backbone of these polymers is generally based on an acrylic acid. Other monomers can be used to vary the carboxylate group along the polymer backbone.

Another preferred class of superplasticizers that can be used with the molecular de-airentrainers of the invention is sulfo-modified melamine-formaldehyde condensates. Included in this class are subclasses melamine formaldehyde sulfonates (MFS) and sulfonated melamine-formaldehyde condensates (SMF).

The molecular de-airentrainers of the invention are effective when added to a superplasticizing admixture. Typically, de-airentrainers are not stable in superplasticizing admixtures over an extended period of time, or when used at high concentration, for example, at a concentration greater than 0.25% of the total admixture combination. Elevated temperatures may also adversely effect the stability of de-airentrainers in superplasticizing admixtures. The molecular de-airentrainers of the invention exhibit improved stability characteristics in superplasticizing admixtures for extended periods of time, up to, and in excess of three months. In addition, the molecular de-airentrainers of the invention exhibit improved long-term stability even at elevated temperatures. The present invention can allow for improved refining of air content for superplasticizing containing mixtures. Additionally, when used with a superplasticizing admixture in mortar formulations, the molecular de-airentrainers of the invention provide earlier compressive strength development compared to existing formulations, and allow for faster setting times of mortars, optimal control of air content of cement mixtures and more consistent compressive strength of cementitious compounds.

Conventional de-airentrainers become ineffective at concentrations of above 0.25% by weight of de-airentrainer in a superplasticizer-containing admixture. In contrast to conventional de-airentrainers, the molecular de-airentrainers of the present invention can be used at concentrations of from 0.25% to 5.0% by weight in a superplasticizer-containing admixture and provide improved air content throughout this range.

### Other Ingredients

The molecular de-airentrainers of the invention may be combined with additional components. The resulting compositions may be incorporated into cement, mortar, concrete compositions, overprint varnishes, plastic coatings, clear coats, inks, dyes, or other suitable applications. Examples of suitable additional components include wetting agents, flow and leveling agents, shrinkage reducing agents, naphthalene sulfonates, polystyrene sulfonates, phosphates, phosphonates, cross-linked homo- or co-polymers of acrylic acid and salts thereof, calcium salts of organic acids, preferably having 1 to 4 carbon atoms, alkanoic acids and salts thereof, aluminum sulfate, metallic aluminum, bentonite, montmorillonite, sepiolite, polyamide fibers, polypropylene fibers, polyvinyl alcohol, and homo-, co-, or terpolymers based on vinyl acetate, maleic ester, ethylene, styrene, butadiene, vinyl versatate, and acrylic monomers, and redispersible dispersion powders such as polyvinyl acetate, polyethylene-polyvinyl acetate, polyvinyl alcohol, and homo-, co-, or terpolymers based on vinyl acetate, maleic esters, ethylene, styrene, butadiene, vinyl versatate, and acrylic monomers. Other suitable components include short and long fibers such as steel, glass, carbon, polyolefins, polyesters, and polyamide fibers. Rheology modifiers (cellulose containing and polysaccharide additives, including starch, biopolymers such as xanthan gum) and alkali swellable acrylic associative thickeners (containing cellulose and/or meth(acrylic) functionalities) may also be used, as well as fine and/or coarse aggregates and/or fillers such as sands or clays. Other inorganic cement components such as gypsum, blast furnace slag, fly ash, aluminum sulfate, metallic aluminum, bentonite, montmorillonite, and sepiolite may be included, as well as dyes, pigments and micronized coloring agents. Other functional additives include set accelerators and/or set retarders, water repellents, hydrophobizing agents, corrosion inhibitors, flame retardants, biocides and fungicides.

### Combinations

The invention is practiced by combining at least one of the above-described ethoxylated ether amines with at least one of the above-described acetylenic alkoxylates to produce a molecular de-airentrainer composition. In one embodiment of the invention, the molecular de-airentrainer composition comprises from 5% to 95% by weight of the total composition of at least one ethoxylated ether amine and from 5% to 95% by weight of the total composition of at least one acetylenic alkoxylate. In a preferred embodiment of the invention, the composition comprises from 20% to 80% by weight of the total composition of at least one ethoxylated ether amine and from 20% to 80% by weight of the total composition of at least one acetylenic alkoxylate. In another embodiment, the de-airentrainer composition comprises at least 50% of the at least one ethoxylated ether amine. In another embodiment of the invention, the at least one ethoxylated ether amine is selected from ethoxylated ether amines including, but not limited to bis (2-hydroxyethyl) isodecyloxypropylamine, poly (5) oxyethylene isodecyloxypropylamine, bis (2-hydroxyethyl) isotridecyloxypropylamine, poly (5) oxyethylene isotridecyloxypropylamine and combinations thereof.

In one embodiment of the invention a blend of acetylenic alkoxylates is used in combination with the at least one ethoxylated ether amine. In one preferred embodiment, less than 10% by weight of the total acetylenic alkoxylate is composed of the at least one acetylenic alkoxylate of Structure BC, depicted above. In this preferred embodiment, the ratio of the at least one acetylenic alkoxylate according to Structure BC to the at least one acetylenic alkoxylate according to Structure BD is less than or equal to 0.1.

In another embodiment of the invention, a single acetylenic alkoxylate is used in combination with the at least one ethoxylated ether amine. In one preferred embodiment, less than 50% by weight of the total de-airentrainer composition is composed of the at least one acetylenic alkoxylate of Structure BC, depicted above. In this embodiment, the at least one acetylenic alkoxylate of Structure BD is absent.

In a preferred embodiment of the invention, 50% by weight of the total de-airentrainer composition is composed of the at least one ethoxylated ether amine, bis (2-hydroxyethyl) isodecyloxypropylamine and the other 50% by weight of the total de-airentrainer composition is composed of the at least one acetylenic lalkoxylate of Structure BC, depicted above.

In a preferred embodiment of the invention, 50% by weight of the total de-airentrainer composition is composed of the at least one ethoxylated ether amine, bis (2-hydroxyethyl) isotridecyloxypropylamine, and the other 50% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, bis (2-hydroxyethyl) isotridecyloxypropylamine, 45% by weight of the total de-airentrainer composition is composed of the at least one acetylenic alkoxylate of Structure BD, as described above, and 5% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, bis (2-hydroxyethyl) isotridecyloxypropylamine, 40% by weight of the total de-airentrainer composition is composed of the at least one acetylenic lalkoxylate of Structure BD, depicted above, and 10% by weight of the total de-airentrainer composition is composed of the at least one acetylenic alkoxylate of Structure BC, depicted above.

In a preferred embodiment of the invention, 75% by weight of the total de-airentrainer composition is composed of the at least one ethoxylated ether amine, bis (2-hydroxyethyl) isotridecyloxypropylamine, and the other 25% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, poly (5) oxyethylene isodecyloxypropylamine and the other 50% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, poly (5) oxyethylene isotridecyloxypropylamine, and the other 50% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, bis (2-hydroxyethyl) isodecyloxypropylamine, 45% by weight of the total de-airentrainer composition is composed of the at least one acetylenic alkoxylate of Structure BD, depicted above, and 5% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, poly (5) oxyethylene isodecyloxypropylamine, 45% by weight of the total de-airentrainer composition is composed of the at least one acetylenic alkoxylate of Structure BD, depicted above, and 5% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, poly (5) oxyethylene isotridecyloxypropylamine, 45% by weight of the total de-airentrainer composition is composed of the at least one acetylenic alkoxylate of Structure BD, depicted above, and 5% by weight of the total de-airentrainer composition is composed of the acetylenic alkoxylate of Structure BC, depicted above.

In a preferred embodiment of the invention, 50% by weight of the total de-airentrainer composition is composed of the at least one ethoxylated ether amine, bis (2-hydroxyethyl) isodecyloxypropylamine, 40% by weight of the total de-airentrainer composition is composed of the at least one acetylenic alkoxylate of Structure BD, and 10% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, poly (5) oxyethylene isodecyloxypropylamine), 40% by weight of the total de-airentrainer composition is composed of the at least one acetylenic alkoxylate of Structure BD, and 10% by weight of the total de-airentrainer composition is composed of the at least one acetylenic alkoxylate of Structure BC, depicted above.

In a preferred embodiment of the invention, 50% by weight of the total de-airentrainer composition is composed of the at least one ethoxylated ether amine, poly (5) oxyethylene isotridecyloxypropylamine, 40% by weight of the total de-airentrainer composition is composed of the at least one acetylenic alkoxylate of Structure BD, depicted above, and 10% by weight of the total de-airentrainer composition is composed of the acetylenic alkoxylate of Structure BC, depicted above.

In a preferred embodiment of the invention, 75% by weight of the total de-airentrainer composition is composed of the at least one ethoxylated ether amine, bis (2-hydroxyethyl) isodecyloxypropylamine, and the other 25% by weight of the total de-airentrainer composition is composed of the at least one acetylenic alkoxylate of Structure BC, depicted above.

In a preferred embodiment of the invention, 75% by weight of the total de-airentrainer composition is composed of the at least one ethoxylated ether amine, poly (5) oxyethylene isodecyloxypropylamine, and the other 25% by weight of the total de-airentrainer composition is composed of the at least one acetylenic alkoxylate of Structure BC, depicted above.

In a preferred embodiment of the invention, 75% by weight of the total de-airentrainer composition is composed of the at least one ethoxylated ether amine, poly (5) oxyethylene isotridecyloxypropylamine, and the other 25% by weight of the total de-airentrainer composition is composed of the at least one acetylenic alkoxylate of Structure BC, depicted above.

In one embodiment the molecular de-airentrainers of the invention are used in combination with a superplasticizer admixture. In this embodiment the molecular de-airentrainer and superplasticizer admixture combination comprises from 95% to 99.9% by weight superplasticizer admixture and from 0.1% to 5.0% by weight molecular de-airentrainer composition. Preferably the combination comprises from 97% to 99.5% by weight superplasticizer and from 0.5% and 3.0% by weight of the molecular de-airentrainer composition. More preferably the combination comprises from 98% to 99% by weight superplasticizer and from 1.0% and 2.0% by weight of the molecular de-airentrainer composition.

### Applications

The molecular de-airentrainer compositions of the invention are suitable for use in a wide range of mixtures and applications. It is believed that the disclosed invention may be suitable for use in any aqueous mixture for which it is desirable to control the specific air content of the mixture, and especially in mixtures containing amphiphilic molecules. Non-limiting examples of such applications include, but are not limited to construction materials, coatings and adhesives, particularly pressure sensitive adhesives.

Specific examples of construction materials include self leveling mortars, cement, grouts, overlayerments and screeds. The invention may be used in other construction material such as heat insulating wall mortar tiles, autocatalytic mortar tiles, self consolidating concrete compositions, wet plasters, rendering compositions, off-shore cementitious compositions, oilfield cementitious compositions and pigment slurries. The invention is useful in production of cement products including as a grind-aid. In particular, the invention is useful in preparing admixtures. Such admixtures include, but are not limited to, high range water reduction admixtures, superplasticizing admixtures, retarding admixtures, sprayed concrete admixtures, foamed concrete admixtures, and strength enriching admixtures.

Specific examples of coatings in which the present invention can be used include overprint varnishes, plastic coatings, and clearcoats.

Additional non-limiting examples of applications for the de-airentrainer composition of the present invention include ink formulations and manufacture, inkjet ink formulations and manufacture, metal working fluids, and industrial and institutional cleaning compositions.

### EXAMPLES

### Example 1

To 100 mL of bis (2-hydroxyethyl) isodecyloxypropylamine in a reaction vessel 100 mL of Surfynol MD 20 surfactant was gently added. The surfactant and the ether amine were homogenized for 30 minutes at 25°C under constant stirring. The mixture was stored at 25°C in normal atmospheric conditions for at least 16 hours prior to first use.

Additional samples of mixtures of bis (2-hydroxyethyl) isodecyloxypropylamine and Surfynol MD 20 surfactant were prepared as above using a varying amount of surfactant. In these preparations, between 51 mL and 100 mL of Surfynol MD 20 surfactant were added to 100mL of bis (2-hydroxyethyl) isodecyloxypropylamine.

### Example 2

To 100 mL of bis (2-hydroxyethyl) isotridecyloxypropylamine in a reaction vessel 100 mL of Surfynol MD 20 surfactant was gently added. The surfactant and the ether amine were homogenized for 30 minutes at 25°C under constant stirring. The mixture was stored at 25°C in normal atmospheric conditions for at least 16 hours prior to first use.

Additional samples of mixtures of bis (2-hydroxyethyl) isotridecyloxypropylamine and Surfynol MD 20 surfactant were prepared as above using a varying amount of surfactant. In these preparations, between 51 mL and 100 mL of Surfynol MD 20 surfactant were added to 100mL of bis (2-hydroxyethyl) isotridecyloxypropyamine.

### Reference Example 3 (not according to the invention)

To 100 mL of bis (2-hydroxyethyl) isotridecyloxypropylamine in a reaction vessel 100 mL of Dynol 604 surfactant was gently added. The surfactant and the ether amine were homogenized for 30 minutes at 25°C under constant stirring. The mixture was stored at 25°C in normal atmospheric conditions for at least 16 hours prior to first use.

### Example 4

To 50 mL of bis (2-hydroxyethyl) isotridecyloxypropylamine in a reaction vessel 47.5mL of Dynol 604 surfactant and 2.5mL Surfynol MD 20 surfactant were gently added. The surfactants and the ether amine were homogenized for 30 minutes at 25°C under constant stirring. The mixture was stored at 25°C in normal atmospheric conditions for at least 16 hours prior to first use.

### Example 5

To 50 mL of bis (2-hydroxyethyl) isotridecyloxypropylamine in a reaction vessel 45mL of Dynol 604 surfactant and 5mL of Surfynol MD 20 surfactant were gently added. The surfactants and the ether amine were homogenized for 30 minutes at 25°C under constant stirring. The mixture was stored at 25°C in normal atmospheric conditions for at least 16 hours prior to first use.

### Example 6

To 75 mL of bis (2-hydroxyethyl) isotridecyloxypropylamine in a reaction vessel 25 mL of Surfynol MD 20 surfactant was gently added. The surfactant and the ether amine were homogenized for 30 minutes at 25°C under constant stirring. The mixture was stored at 25°C in normal atmospheric conditions for at least 16 hours prior to first use.

### Example 7

To 75 mL of bis (2-hydroxyethyl) isodecyloxypropylamine in a reaction vessel 25 mL of Surfynol MD 20 surfactant was gently added. The surfactant and the ether amine were homogenized for 30 minutes at 25°C under constant stirring at 300 rpm. The mixture was stored at 25°C in normal atmospheric conditions for at least 16 hours prior to first use

Additional samples of mixtures of bis (2-hydroxyethyl) isodecyloxypropylamine and Surfynol MD 20 surfactant were prepared as above using a varying amount of surfactant. In these preparations, between 2.5 mL and 25 mL of Surfynol MD 20 surfactant were added to 75 mL of bis (2-hydroxyethyl) isotridecyloxypropyamine.

### Example 8

To 100 mL of Pluronic L61 (BASF Corporation) in a reaction vessel 100 mL of MD20 surfactant was gently added. The surfactant and the ether amine were homogenized for 30 minutes at 25°C under constant stirring. The mixture was stored at 25°C in normal atmospheric conditions for at least 16 hours prior to first use.

### Example 9

Improved stability of de-airentrainers in a superplasticizer solution.

Commercially available de-airentrainers were compared with the combinations of Examples 1, 2 and 4 - 7 as well as Reference Example 3 to evaluate stability of each over time in a solution of superplasticizer. The commercially available de-airentrainers tested were tributylphosphate, triisobutylphosphate (both from Sigma Aldrich Inc.), Pluronic L61 (BASF Corporation), Lumiten EL (BASF Aktiengesellschaft), BYK A 590 (BYK-Chemie GmbH), Surfynol DF-574, Surfynol DF-695, Surfynol 2502, Surfynol 440, Surfynol MD20, and Dynol 604 surfactants (all six from APCI). The embodiments of the present invention tested are set forth in Examples 1 - 7.

All de-airentrainers were prepared with 30% by weight solution of superplasticizer (PCE X admixture, Mapei SpA). The superplasticizer was not neutralized using ammonia or sodium hydroxide. The pH of the superplasticizer was approximately 6.5. The ionic strength of the superplasticizer is considered to be below 0.2 mol/L. Each commercially available de-airentrainer was prepared in a solution of superplasticizers at a concentration of 0.5% active de-airentrainer to superplasticizer by weight. The combinations as described in Examples 1, 2 and 4 - 7 as well as Reference Example 3 were also each prepared in a solution of superplasticizer at a concentration of 0.5% active de-airentrainer to superplasticizer by weight. Additionally, samples prepared according to Reference Example 3 and Examples 4 - 6, were mixed in a superplasticizer solution at both 1.0% and 2.0% de-airentrainer to superplasticizer by weight.

Samples of each preparation were stored in a superplasticizer solution for 28 days at both 23°C and at 50°C; samples of each preparation were also stored in a superplasticizer solution for 3 months at both 23°C and at 50°C. After continual storage in a superplasticizer solution at the specified temperature for the specified period of time each preparation was evaluated for stability. Each preparation was graded either stable or not-stable in comparison to freshly prepared solutions.

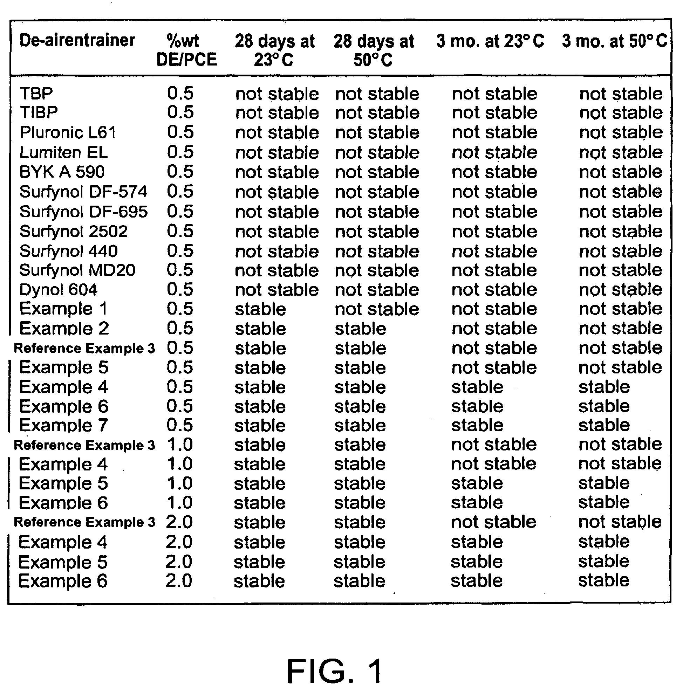

The results of Example 9 are tabulated in Figure 1.

The commercially available de-airentrainers tested were not stable after 28 days when stored in a superplasticizer solution at 23°C. Neither, were the tested commercially available de-airentrainers stable when stored in a superplasticizer solution for 28 days at 50°C. The samples from Examples 1, 2 and 4 - 7 as well as Reference Example 3 of the de-airentrainer compositions disclosed herein were shown to be stable when stored in a superplasticizer solution at 23°C for 28 days. With the exception of the experimental de-airentrainer composition as prepared in Example 1, the de-airentrainer compositions of the present invention, as prepared in Examples 2 and 4 - 7 as well as Reference Example 3, were also stable when stored in a superplasticizer solution at 50°C for 28 days. Four disclosed de-airentrainer compositions, those prepared in Examples 4 - 7, were stable in superplasticizer solution at 0.5% by weight concentration at for as long as 3 months at both 23°C and 50°C.

When the samples as prepared in Reference Example 3 and Examples 4 - 6 were stored in solution at a higher concentration of de-airentrainer to superplasticizer, 1.0% by weight, these de-airentrainer compositions were shown to be stable for 28 days at both 23°C and 50°C. Two of those samples, Examples 5 and 6, remained stable for as long as 3 months at both 23°C and 50°C. The samples as prepared in Reference Example 3 and Example 4 were not stable after 3 months of exposure to conditions of either 23°C or 50°C.

When the samples as prepared in Reference Example 3 and Example 4 - 6 were stored in solution at yet higher de-airentrainer to superplasticizer concentrations, 2.0% by weight, Reference Examples 3 and Examples 4 - 6 were still stable for 28 days and both 23°C and 50°C. The preparations from Examples 4 - 6 were stable for as long as 3 months both at 23°C and at 50°C. The preparation from Reference Example 3 was not stable after 3 months of exposure to conditions of either 23°C or 50°C.

### Example 10

Reduced air content with de-airentrainers of the present invention.

Commercially available de-airentrainers were compared with embodiments of the present invention on the basis of air content in mortar shortly after setting. Tributylphosphate (Sigma Aldrich Inc., St. Louis, MO) and Surfynol 2502 surfactant (APCI) were compared against the combinations as prepared in Reference Examples 3 and Examples 4 - 6 to determine the ability of each to reduce air content of mortar after preparation.

Various mortars were prepared following standard protocol (formulated according to ASTM C172-99, EN 480-1-13, EN196-1/13 and prepared according to ASTM C305 and EN 197-1) with the type of de-airentrainer and percent by weight of de-airentrainer in superplasticizer solution as the variables between preparations. In the mortar preparations using commercially available de-airentrainers, the de-airentrainers were added at the rates of 0%, 0.5%, and 1.0% by weight of de-airentrainer composition to superplasticizer (PCE X admixture, Mapei SpA). In the mortar preparations using de-airentrainers as prepared from Reference Examples 3 and Examples 4 - 6, the de-airentrainers were added at the rates of 0%, 0.5%, 1.0%, 2.0% and 3.0% of de-airentrainer to superplasticizer PCE X admixture.

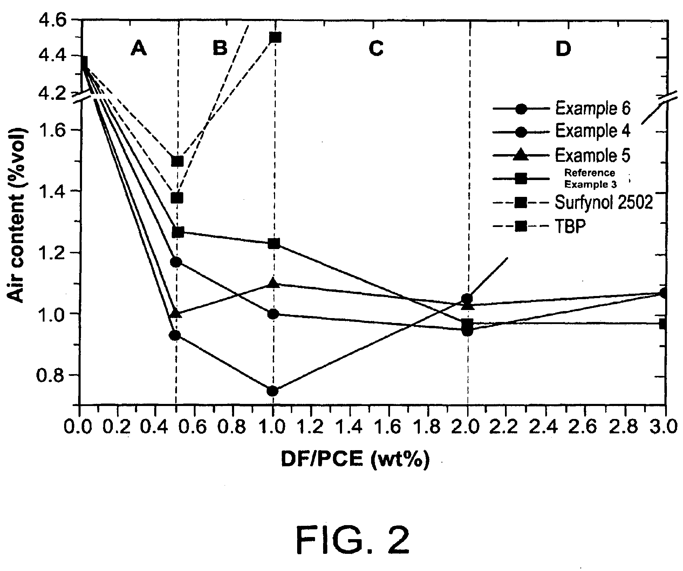

Using standard procedures (formulated according to ASTM C185-9, C231, DIN 18555-2 and EN 1015-7) air content was measured 30 minutes after setting mortar preparations. For accuracy and reproducibility all measures of air content reported are the averaged result of at least three consecutive measures. The results of the air content measure are shown in Figure 2.

The mortar preparations using de-airentrainer compositions from Reference Examples 3 and Examples 4 - 6 outperformed commercially available de-airentrainers in comparing all mortars prepared using the lowest concentration of de-airentrainer to superplasticizer solution tested, 0.5% de-airentrainer to superplasticizer solution by weight. Also of note, the mortar preparations using de-airentrainer compositions from Reference Examples 3 and Examples 4 - 6 were able to perform effectively at concentrations above 0.5% of de-airentrainer to superplasticizer in mortar preparations. At the level of 1.0% by weight de-airentrainer to superplasticizer, the mortars prepared using commercially available de-airentrainers failed to reduce the air content below that of mortar lacking any de-airentrainer. It is known that commercially available de-airentrainers generally do not remain in solution with superplasticizers under standard conditions at concentrations of 1.0% and above (see Example 9). It is thought that this instability contributes to the failure of the commmercial de-airentrainers tested in this Example.

### Example 11

Improvement of the long-term de-aeration efficacy of a de-airentrainer in a PCE-based superplasticizing admixture.

In this example, mortars were prepared according to standard procedure (formulated according to ASTM C172-99, EN 480-1-13, EN196-1/13 and prepared according to ASTM C305 and EN 197-1) while using de-airentrainers in a superplasticizing admixture. Six varieties of de-airentrainers were tested in the preparation of mortars. The de-airentrainers tested were tributylphosphate, SURFYNOL 2502 surfactant, and the de-airentrainers produced in Reference Examples 3 and Examples 4 - 6. Mortars were prepared using the de-airentrainers in a PCE superplasticizer at both 0.5% and 1.0% by weight percent de-airentrainer to superplasticizer. One set of mortars for each de-airentrainer was prepared using freshly prepared admixture. Another set of mortars for each de-airentrainer were prepared using admixture aged for 28 days at 50°C.

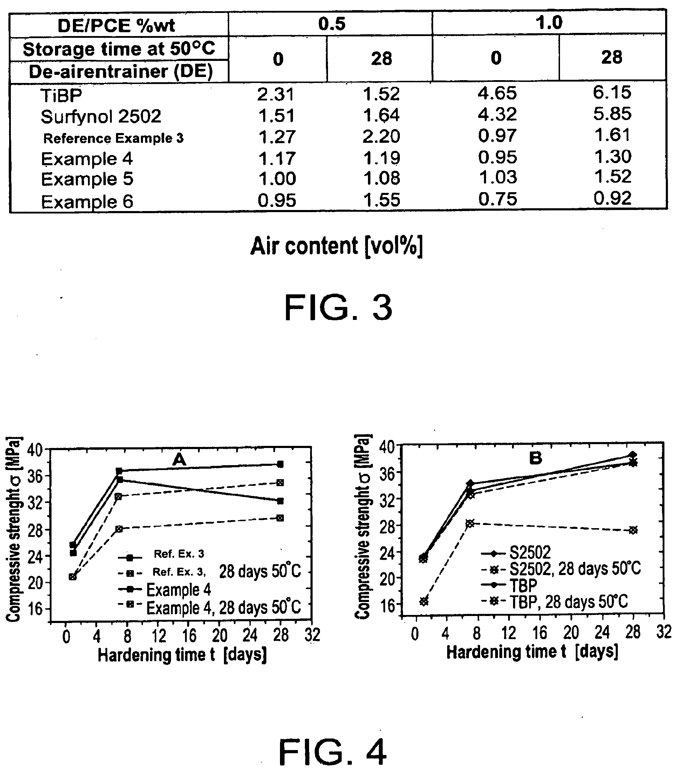

Using standard procedures (formulated according to ASTM C185-9, C231, DIN 18555-2 and EN 1015-7) the air content of each mortar preparation was determined. For accuracy and reproducibility all measures of air content reported were the averaged result of at least three consecutive measures. The tabulated results are shown in Figure 3.

As shown in Figure 3, the mortar preparations using de-airentrainers as prepared in each of Examples 4 - 6 has air content reduced to below 1.2% for both freshly prepared admixtures and aged admixtures. In contrast, the mortar preparations using de-airentrainers SURFYNOL 2502 surfactant, tributylphosphate, or the de-airentrainer as prepared in Reference Example 3, all had air content above 1.2%. Using freshly prepared admixtures at a higher concentration of 1.0% de-airentrainer to superplasticizer, the de-airentrainers of Reference Examples 3 and Example 4 - 6 produced mortar with air content of 1.03% or less. However, under the same conditions and concentration the mortars prepared with SURFYNOL 2502 surfactant and tributylphosphate had air content above 4%. Considering the admixtures containing a concentration of 1.0% de-airentrainer to superplasticizer that were aged 28 days before preparing mortar, the mortars prepared with de-airentrainers of 'Reference Examples 3 and Examples 4 - 6 had air content varying between 0.92% and 1.61%. The aged 1.0% de-airentrainer to superplasticizer admixtures prepared using SURFYNOL 2502 surfactant and tributylphosphate had much higher air content, 5.85 and 6.15 respectively.

### Example 12

Improvement of early compressive strength development of standard mortars, at initial use and upon aging 28 days at 50°C

In this example, mortar samples were prepared according to standard procedures (formulated according to ASTM C172-99, EN 480-1-13, EN196-1/13 and prepared according to ASTM C305 and EN 197-1). Preparations were created substituting four different de-airentrainers. The de-airentrainers tested were tributylphosphate, Surfynol 2502 surfactant, and the de-airentrainers produced in Reference Examples 3 and Example 4. The de-airentrainers were added at a concentration of 0.5% by weight of the total superplasticizer. Two classes of preparations were made; one using freshly prepared admixtures, the other using admixtures aged for 28 days at 50°C.

The compressive strength of each preparation of mortar was evaluated using standard procedures and a minimum of 12 measurements. Compressive strength of the mortar preparations was measured after curing for 1 day, 7 days and 28 days. Graphs of the development of compressive strength for each mortar preparation are depicted in Figures 4A and 4B.

The use of 0.5% by weight of de-airentrainer as prepared in Example 4 in a standard mortar formulation leads to faster early compressive strength development of freshly prepared standard mortars when compared to the same preparations using the de-airentrainers SURFYNOL 2502 surfactant, tributylphosphate, and as prepared in Reference Example 3. This difference is especially notable in the compression strength after 7 days hardening. The mortars prepared with de-airentrainer from Example 4 produced the fastest onset of compressive strength after 7 days of hardening when compared to all mortars tested. The admixture containing the de-airentrainer as prepared in Example 4 for 28 days at 50° C provided mortar with greater compressive strength than other de-airentrainers freshly prepared.

### Example 13

Homogenous compressive strength development of standard mortars, at initial use and upon aging 28 days at 50°C.

In this example mortar samples were prepared according to standard procedures (formulated according to ASTM C172-99, EN 480-1-13, EN196-1/13 and prepared according to ASTM C305 and EN 197-1). Preparations were created using four different de-airentrainers. The de-airentrainers tested were tributylphosphate, SURFYNOL 2502 surfactant, and the de-airentrainers produced in Reference Examples 3 and Example 4. The de-airentrainers were added at a concentration of 0.5% by weight of the total preparation. Two classes of preparations were made, one using freshly prepared admixtures, the other using admixtures aged for 28 days at 50°C.

According to Fick's diffusion laws it is known that water evaporates faster from the external mortar than from internal mortar. Because the hydration and hardening reaction of mortar is exothermic, it is expected to register compressive strength values higher for the internal volume than the external volume of the mortar sample.

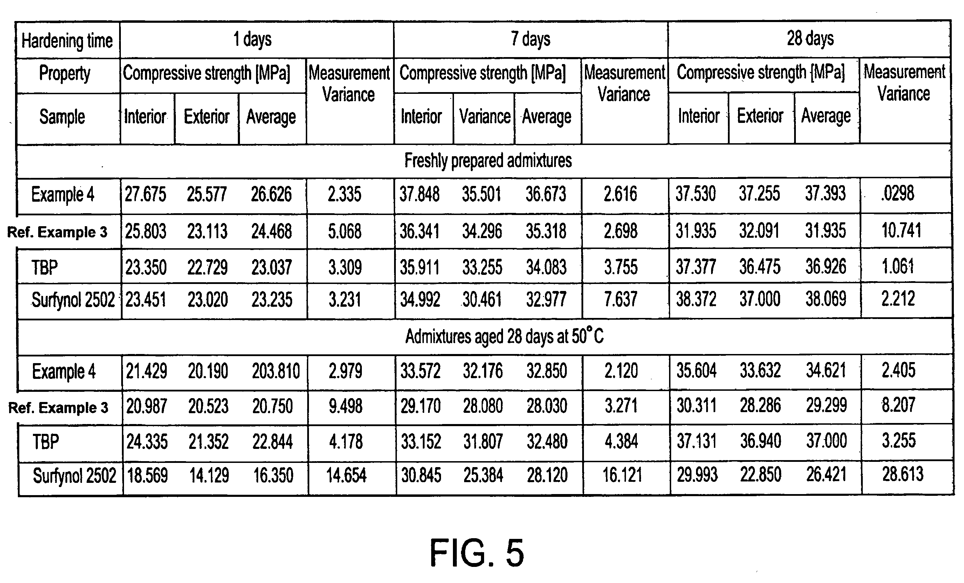

The compressive strength of each preparation of mortar was evaluated using standard procedures and a minimum of 12 measurements. Compressive strength of the mortar preparations was measured after curing for 1 day, 7 days and 28 days. The compressive strength was measured for both the internal mortar and the external mortar of each preparation. The results of the compressive strength of the internal mortar and the external mortar were compared for variance. An average of the compressive strength for each mortar preparation was also determined. The results of the compressive strength tests are presented in Figure 5.

The use of 0.5 wt% de-airentrainer of the de-airentrainer prepared in Example 4, leads to a reduced variance of the compressive strength and a minimum difference of the compressive strength between the interior and exterior volume of the mortar sample. This tendency is maintained throughout the 28 days of the hardening process.

## Claims

1. A de-airentrainer composition comprising at least one ethoxylated ether amine according to the general structure (A): 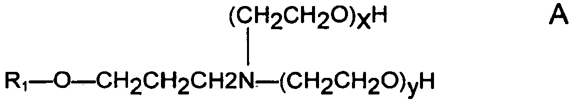
wherein R₁ is a branched or unbranched hydrocarbon chain of from 5 to 20 carbons in length;
x is an integer of from 0 to 10;
y is an integer of from 0 to 10;
and the sum of x + y is an integer of from 1 to 20;
and at least one acetylenic alkoxylate according to the general structure (B): 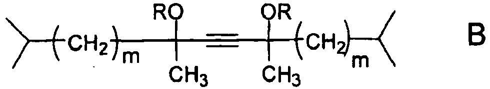 wherein m is 1, and R is according to structure (C): 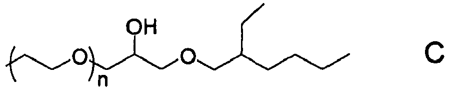 in which n is an integer from 3 to 7.

2. The de-airentrainer composition of claim 1 further comprising an acetylenic alkoxylate according to the general structure (B): 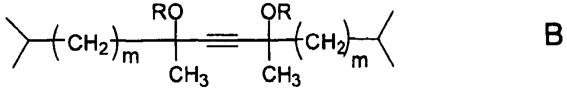 wherein m is 2 and R is according to structure (D) 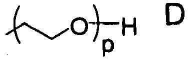 in which p is an integer from 1 to 10.

3. The de-airentrainer composition of claim 1, wherein the value of x and y each individually equals from 2 to 5.

4. The de-airentrainer composition of claim 1, wherein the at least one ethoxylated ether amine is selected from the group consisting of bis (2-hydroxyethyl) isodecyloxypropylamine, poly (5) oxyethylene isodecyloxypropylamine, bis (2-hydroxyethyl) isotridecyloxypropylamine, poly (5) oxyethylene isotridecyloxypropylamine and combinations of one or more thereof.

5. The de-airentrainer composition of claim 1, wherein the composition comprises from 5% to 95% by weight of the at least one ethoxylated ether amine and from 5% to 95% by weight of the at least one acetylenic alkoxylate.

6. The de-airentrainer composition of claim 5, wherein the composition comprises from 20% to 80% by weight of the at least one ethoxylated ether amine and from 20% to 80% by weight the at least one acetylenic alkoxylate.

7. The de-airentrainer composition of claim 6, wherein the composition comprises at least 50% of the at least one ethoxylated ether amine.

8. The de-airentrainer composition of claim 1,
further comprising an acetylenic alkoxylate according to the general structure (B): 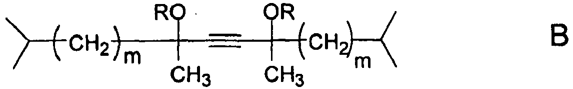 wherein m is 2 and R is according to structure (D) 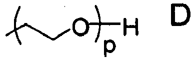 in which p is an integer from 1 to 10
wherein, in the de-airentrainer composition, the ratio by weight of the at least one acetylenic alkoxylate of claim 1 wherein m is 1 and R is according to structure (C) to the acetylenic alkoxylate of structure (B) wherein m is 2 and R is according to structure (D) is less than or equal to 0.1.

9. The de-airentrainer composition of claim 1, wherein the composition comprises less than or equal to 50% by weight of the at least one acetylenic alkoxylate of claim 1 wherein m is 1 and R is according to structure (C) in the absence of
the acetylenic alkoxylate according to the general structure (B): 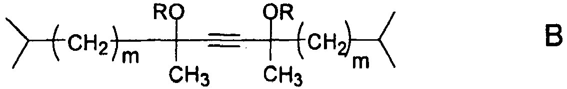 wherein m is 2 and R is according to structure (D) 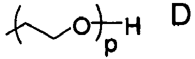 in which p is an integer from 1 to 10.

10. The de-airentrainer composition of claim 1, comprising 50% by weight of bis (2-hydroxyethyl) isodecyloxypropylamine and 50% by weight of the at least one acetylenic alkoxylate of claim 1 wherein m is 1 and R is according to structure (C).

11. The de-airentrainer composition of claim 1, comprising 50% by weight of poly (5) oxyethylene isotridecyloxypropylamine and 50% by weight of the at least one acetylenic alkoxylate of claim 1 wherein m is 1 and R is according to structure (C).

12. The de-airentrainer composition of claim 1, further comprising an acetylenic alkoxylate according to the general structure (B): 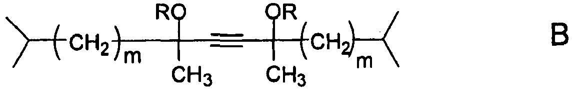 wherein m is 2 and R is according to structure (D) 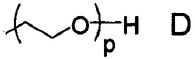 in which p is an integer from 1 to 10
the de-airentrainer composition comprising 50% by weight of bis (2-hydroxyethyl) isotridecyloxypropylamine, 2.5% by weight of the at least one acetylenic alkoxylate of claim 1 wherein m is 1 and R is according to structure (C) and 47.5% by weight of the acetylenic alkoxylate of structure (B) wherein m is 2 and R is according to structure (D).

13. The de-airentrainer composition of claim 1, further comprising an acetylenic alkoxylate according to the general structure (B): 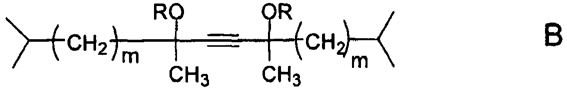 wherein m is 2 and R is according to structure (D) 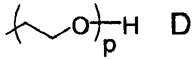 in which p is an integer from 1 to 10
the de-airentrainer composition comprising 50% by weight of bis (2-hydroxyethyl) isotridecyloxypropylamine, 5% by weight of the at least one acetylenic alkoxylate of claim 1 wherein m is 1 and R is according to structure (C) and 45% by weight of the acetylenic alkoxylate of structure (B) wherein m is 2 and R is according to structure (D).

14. The de-airentrainer composition of claim 1 further comprising a superplasticizer.

## Patentansprüche

1. Luftporenabbauende Zusammensetzung, umfassend mindestens ein ethoxyliertes Etheramin gemäß der allgemeinen Struktur (A): 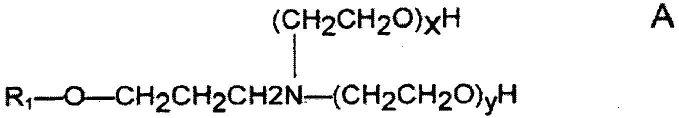
wobei R₁ eine verzweigte oder unverzweigte Kohlenwasserstoffkette mit einer Länge von 5 bis 20 Kohlenstoffatomen ist;
x eine ganze Zahl von 0 bis 10 ist;
y eine ganze Zahl von 0 bis 10 ist;
und die Summe von x + y eine ganze Zahl von 1 bis 20 ist;
und mindestens ein acetylenisches Alkoxylat gemäß der allgemeinen Struktur (B): 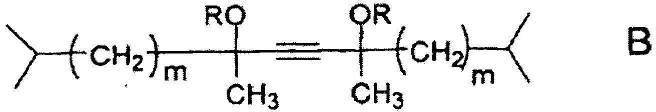 wobei m 1 und R gemäß der Struktur (C) ist: 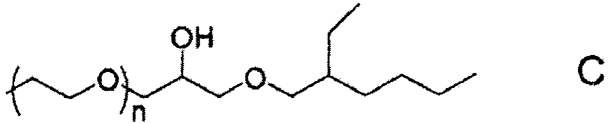 wobei n eine ganze Zahl von 3 bis 7 ist.

2. Luftporenabbauende Zusammensetzung nach Anspruch 1, ferner umfassend ein acetylenisches Alkoxylat gemäß der allgemeinen Struktur (B): 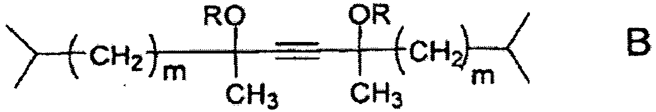 wobei m 2 und R gemäß der Struktur (D) ist: 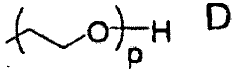 wobei p eine ganze Zahl von 1 bis 10 ist.

3. Luftporenabbauende Zusammensetzung nach Anspruch 1, wobei der Wert von x und y jeweils unabhängig gleich 2 bis 5 ist.

4. Luftporenabbauende. Zusammensetzung nach Anspruch 1, wobei das mindestsens eine ethoxylierte Etheramin aus der Gruppe ausgewählt ist, bestehend aus Bis(2-hydroxyethyl)isodecyloxypropylamin, Poly(5)oxyethylenisodecyloxypropylamin, Bis(2-hydroxyethyl)isotridecyloxypropylamin, Poly(5)oxyethylenisotridecyloxypropylamin und Kombinationen aus ein oder mehreren davon.

5. Luftporenabbauende Zusammensetzung nach Anspruch 1, wobei die Zusammensetzung 5 Gew.-% bis 95 Gew.-% von mindestens einem ethoxyliertem Etheramin und 5 Gew.-% bis 95-Gew.-% von mindestens einem acetylenischen Alkoxylat umfasst.

6. Luftporenabbauende Zusammensetzung nach Anspruch 5, wobei die Zusammensetzung 20 Gew.-% bis 80 Gew.-% von mindestens einem ethoxyliertem Etheramin und 20 Gew.-% bis 80-Gew.-% von mindestens einem acetylenischen Alkoxylat umfasst.

7. Luftporenabbauende Zusammensetzung nach Anspruch 6, wobei die Zusammensetzung mindestens 50 % von einem ethoxyliertem Etheramin umfasst.

8. Luftporenabbauende Zusammensetzung nach Anspruch 1,
ferner umfassend ein acetylenisches Alkoxylat gemäß der allgemeinen Struktur (B): 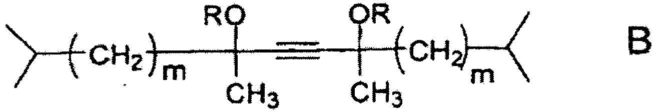 wobei m 2 und R gemäß der Struktur (D) ist: 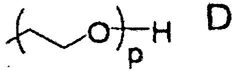 wobei p eine ganze Zahl von 1 bis 10 ist,
wobei in der luftporenabbauenden Zusammensetzung das Gewichtsverhältnis von dem mindestens einen acetylenischen Alkoxylat nach Anspruch 1, wobei m 1 und R gemäß der Struktur (C) ist, zu dem acetylenischen Alkoxylat mit der Struktur (B), wobei m 2 und R gemäß der Struktur (D) ist, weniger oder gleich 0,1 ist.

9. Luftporenabbauende Zusammensetzung nach Anspruch 1, wobei die Zusammensetzung weniger oder gleich 50 Gew.-% von dem mindestens einen acetylenischen Alkoxylat nach Anspruch 1 umfasst, wobei m 1 und R gemäß der Struktur (C) ist, und zwar in Abwesenheit
des acetylenischen Alkoxylats gemäß der allgemeinen Struktur (B): 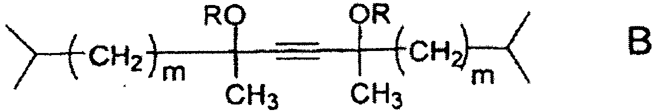 wobei m 2 und R gemäß der Struktur (D) ist: 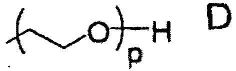 p eine ganze Zahl von 1 bis 10 ist.

10. Luftporenabbauende Zusammensetzung nach Anspruch 1, umfassend 50 Gew.-% Bis(2-hydroxyethyl)isodecyloxypropylamin und 50 Gew.-% des mindestens einen acetylenischen Alkoxylats nach Anspruch 1, wobei m 1 und R gemäß der Struktur (C) ist.

11. Luftporenabbauende Zusammensetzung nach Anspruch 1, umfassend 50 Gew.-% Poly(5)oxyethylenisotridecyloxypropylamin und 50 Gew.-% des mindestens einen acetylenischen Alkoxylats nach Anspruch 1, wobei m 1 und R gemäß der Struktur (C) ist.

12. Luftporenabbauende Zusammensetzung nach Anspruch 1, ferner umfassend ein acetylenisches Alkoxylat gemäß der allgemeinen Struktur (B): 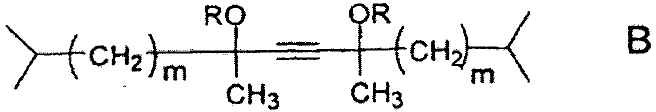 wobei m 2 und R gemäß der Struktur (D) ist: 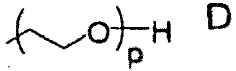 wobei p eine ganze Zahl von 1 bis 10 ist,
wobei die luftporenabbauende Zusammensetzung 50 Gew.-% Bis(2-hydroxyethyl)isotridecyloxypropylamin, 2,5 Gew.-% des mindestens einen acetylenischen Alkoxylats nach Anspruch 1, wobei m 1 und R gemäß der Struktur (C) ist, und 47,5 Gew.-% des acetylenischen Alkoxylats mit der Struktur (B), wobei m 2 und R gemäß der Struktur (D) ist, umfasst.

13. Luftporenabbauende Zusammensetzung nach Anspruch 1, ferner umfassend ein acetylenisches Alkoxylat gemäß der allgemeinen Struktur (B): 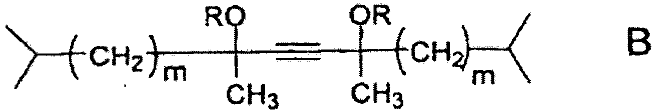 wobei m 2 und R gemäß der Struktur (D) ist: 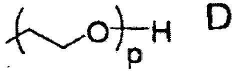 wobei p eine ganze Zahl von 1 bis 10 ist,
wobei die luftporenabbauende Zusammensetzung 50 Gew.-% Bis(2-hydroxyethyl)isotridecyloxypropylamin, 5 Gew.-% des mindestens einen acetylenischen Alkoxylats nach Anspruch 1, wobei m 1 und R gemäß der Struktur (C) ist, und 45 Gew.-% des acetylenischen Alkoxylats mit der Struktur (B), wobei m 2 und R gemäß der Struktur (D) ist, umfasst.

14. Luftporenabbauende Zusammensetzung nach Anspruch 1, ferner umfassend ein Fließmittel.

## Revendications

1. Composition de désentraîneur d'air comprenant au moins une éther-amine éthoxylée correspondant à la structure générale (A) : 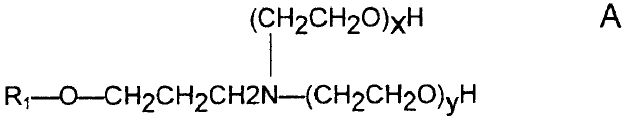
dans laquelle R₁ est une chaîne hydrocarbonée ramifiée ou non ramifiée ayant une longueur de 5 à 20 carbones ;
x est un entier de 0 à 10 ;
y est un entier de 0 à 10 ;
et la somme x + y est un entier de 1 à 20 ;
et au moins un alcoxylate acétylénique correspondant à la structure générale (B) : 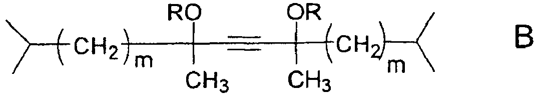 dans laquelle m vaut 1 et R correspond à la structure (C) : 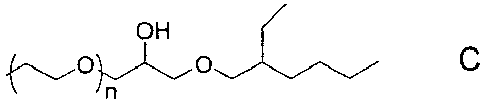 dans laquelle n est un entier de 3 à 7.

2. Composition de désentraîneur d'air selon la revendication 1, comprenant en outre un alcoxylate acétylénique correspondant à la structure générale (B) : 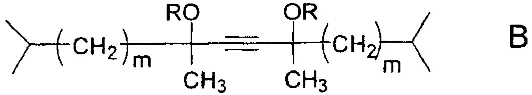 dans laquelle m vaut 2 et R correspond à la structure (D) : 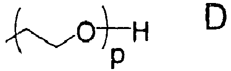 dans laquelle p est un entier de 1 à 10.

3. Composition de désentraîneur d'air selon la revendication 1, dans laquelle chacune des valeurs x et y est comprise entre 2 à 5.

4. Composition de désentraîneur d'air selon la revendication 1, dans laquelle l'au moins une éther-amine éthoxylée est choisie dans le groupe constitué par la bis(2-hydroxyéthyl)isodécyloxypropylamine, l'isodécyloxypropylamine poly(5)oxyéthylénée, le bis(2-hydroxyéthyl)isotridécyloxypropylamine, l'isotridécyloxypropylamine poly(5)oxyéthylénée, et les combinaisons d'une ou plusieurs de celles-ci.

5. Composition de désentraîneur d'air selon la revendication 1, laquelle composition comprend de 5 % à 95 % en poids de l'au moins une éther-amine éthoxylée et de 5 % à 95 % en poids de l'au moins un alcoxylate acétylénique.

6. Composition de désentraîneur d'air selon la revendication 5, laquelle composition comprend de 20 % à 80 % en poids de l'au moins une éther-amine éthoxylée et de 20 % à 80 % en poids de l'au moins un alcoxylate acétylénique.

7. Composition de désentraîneur d'air selon la revendication 6, laquelle composition comprend au moins 50 % de l'au moins une éther-amine éthoxylée.

8. Composition de désentraîneur d'air selon la revendication 1, comprenant en outre un alcoxylate acétylénique correspondant à la structure générale (B) : 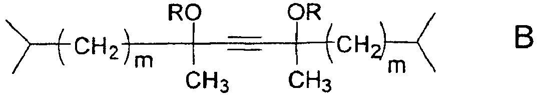 dans laquelle m vaut 2 et R correspond à la structure (D) : 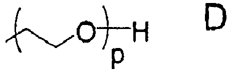 dans laquelle p est un entier de 1 à 10, dans laquelle, dans la composition de désentraîneur d'air, le rapport en poids de l'au moins un alcoxylate acétylénique de la revendication 1 dans lequel m vaut 1 et R correspond à la structure (C) de l'alcoxylate acétylénique de structure (B) dans lequel m vaut 2 est R correspond à la structure (D) est inférieur ou égal à 0,1.

9. Composition de désentraîneur d'air selon la revendication 1, laquelle composition comprend 50 % en poids ou moins de l'au moins un alcoxylate acétylénique de la revendication 1 dans lequel m vaut 1 et R correspond à la structure (C), en l'absence de l'alcoxylate acétylénique correspondant à la structure générale (B) : 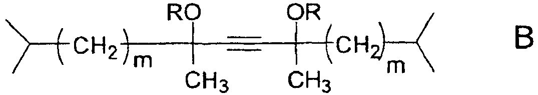 dans laquelle m vaut 2 et R correspond à la structure (D) : 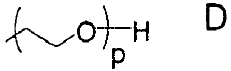 dans laquelle p est un entier de 1 à 10.

10. Composition de désentraîneur d'air selon la revendication 1, comprenant 50 % en poids de bis(2-hydroxyéthyl)isodécyloxypropylamine et 50 % en poids de l'au moins un alcoxylate acétylénique de la revendication 1 dans lequel m vaut 1 et R correspond à la structure (C).

11. Composition de désentraîneur d'air selon la revendication 1, comprenant 50 % en poids d'isotridécyloxypropylamine poly(5)oxyéthylénée et 50 % en poids de l'au moins un alcoxylate acétylénique de la revendication 1 dans lequel m vaut 1 et R correspond à la structure (C).

12. Composition de désentraîneur d'air selon la revendication 1, comprenant en outre un alcoxylate acétylénique correspondant à la structure générale (B) : 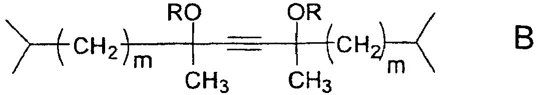 dans laquelle m vaut 2 et R correspond à la structure (D) : 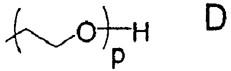 dans laquelle p est un entier de 1 à 10,
la composition de désentraîneur d'air comprenant 50 % en poids de bis(2-hydroxyéthyl)isotridécyloxypropylamine, 2,5 % en poids de l'au moins un alcoxylate acétylénique de la revendication 1 dans lequel m vaut 1 et R correspond à la structure (C), et 47,5 % en poids de l'alcoxylate acétylénique de structure (B) dans lequel m vaut 2 et R correspond à la structure (D).

13. Composition de désentraîneur d'air selon la revendication 1, comprenant en outre un alcoxylate acétylénique correspondant à la structure générale (B) : 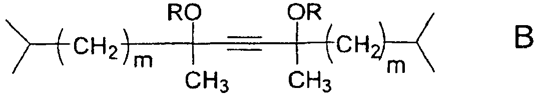 dans laquelle m vaut 2 et R correspond à la structure (D) : 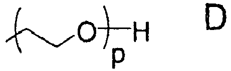 dans laquelle p est un entier de 1 à 10,
la composition de désentraîneur d'air comprenant 50 % en poids de bis(2-hydroxyéthyl)isotridécyloxypropylamine, 5 % en poids de l'au moins un alcoxylate acétylénique de la revendication 1 dans lequel m vaut 1 et R correspond à la structure (C), et 45 % en poids de l'alcoxylate acétylénique de structure (B) dans lequel m vaut 2 et R correspond à la structure (D).

14. Composition de désentraîneur d'air selon la revendication 1, comprenant en outre un superplastifiant.
